# FASCICULE DE BREVET EUROPEEN

(11) **EP 1 555 176 B1**
(45) Date de publication et mention de la délivrance du brevet: **08.11.2006**
(21) Numéro de dépôt: 04292772.3
(22) Date de dépôt: 24.11.2004
(51) Int. Cl.: B60S 1/04

(54) **Dispositif de positionnement et de fixation de deux pièces mécaniques, agencement de véhicule automobile comprenant un tel dispositif, et véhicule comprenant un tel agencement**
Positionier- und Befestigunseinrichtung für zwei mechanische Teile, Fahrzeuganordnung mit einer solchen Einrichtung und Fahrzeug mit einer solchen Anordnung
Position and fixation device for two mechanical pieces, vehicle arrangement with such a device and vehicle with such an arrangement

(30) Priorité: 02.12.2003 FR 0314156
(43) Date de publication de la demande: 20.07.2005
(73) Titulaire: Peugeot Citroën Automobiles S.A., 78140 Vélizy Villacoublay (FR)
(72) Inventeur: Jeuffe, Gérard, 78810 Feucherolles (FR)
(74) Mandataire: Jacobson, Claude

(56) Documents cités:
- EP-A- 0 359 733
- EP-A- 0 574 309
- DE-A- 4 409 957
- DE-A- 19 642 672
- FR-A- 2 534 537
- FR-A- 2 761 318
- FR-A- 2 789 132
- PATENT ABSTRACTS OF JAPAN vol. 1995, no. 06, 31 juillet 1995 (1995-07-31) -& JP 07 076263 A (NISSAN MOTOR CO LTD), 20 mars 1995 (1995-03-20)

## Description

La présente invention concerne un dispositif de positionnement et de fixation d'une première pièce mécanique sur une deuxième pièce mécanique, comprenant au moins trois paires d'éléments de fixation, chacune comprenant un premier élément de fixation solidaire de la première pièce mécanique, et un deuxième élément de fixation solidaire de la deuxième pièce mécanique dans lequel l'une desdites paires forme une liaison par enclenchement élastique selon une première direction, tandis que les deux autres paires forment des paliers offrant à la première pièce mécanique une liberté de rotation par rapport à la deuxième pièce mécanique, suivant un même axe sensiblement orthogonal à ladite direction d'enclenchement.

Les dispositifs connus de ce type ne donnent généralement pas entière satisfaction car ils nécessitent un alignement précis des éléments de fixation fonctionnant par enclenchement.

De là découlent d'une part un coût de fabrication important dû à la précision requise des pièces, et d'autre part un temps de montage important.

Ces problèmes sont particulièrement amplifiés dans le domaine de la construction automobile, s'agissant du montage sur véhicule de pièces d'équipement, tels que des mécanismes d'essuie-vitre ou autres modules pré-assemblés à monter sur un véhicule.

L'invention a pour objet de remédier aux problèmes précités, et de proposer un dispositif de positionnement et de fixation de deux pièces mécaniques, du type exposé plus haut, qui permette une compensation d'un désaxage important entre les éléments de fixation fonctionnant par enclenchement élastique axial.

A cet effet, selon l'invention, le deuxième élément de fixation de la paire formant liaison par enclenchement comprend une rotule en saillie de la deuxième pièce mécanique, tandis que le premier élément de fixation de la paire formant liaison par enclenchement comprend un bloc en matériau élastomère solidaire de la première pièce mécanique, et un organe de réception et de blocage de la rotule logé dans ledit bloc élastomère.

Selon des modes de réalisation de l'invention :
- le premier élément de fixation d'une première des deux paires formant palier comprend un téton partiellement cylindrique solidaire de la première pièce mécanique à une extrémité libre d'un bras en saillie de cette dernière, tandis que le deuxième élément de fixation de la même paire comprend une plaquette de fixation solidaire de la deuxième pièce mécanique et dans laquelle est ménagé un trou oblong complémentaire du téton, ayant une ouverture latérale d'introduction dudit téton ;
- le trou oblong s'étend selon une direction sensiblement orthogonale d'une part à la direction d'enclenchement, et d'autre part à l'axe de rotation défini par les paliers ;
- le premier élément de fixation de la deuxième des deux paires formant palier comprend un téton partiellement cylindrique solidaire de la première pièce mécanique à une extrémité libre d'un bras en saillie de cette dernière, tandis que le deuxième élément de fixation de la même paire comprend une plaquette de fixation solidaire de la deuxième pièce mécanique et dans laquelle est ménagé un trou circulaire complémentaire du téton ;
- l'organe de réception et de blocage comprend une douille rigide fixée dans le bloc et un manchon déformable coaxial, complémentaire, et monté mobile axialement à l'intérieur de la douille, entre une position de déverrouillage dans laquelle le manchon est libre de se déformer lors d'un mouvement d'engagement ou de retrait de la rotule pour autoriser respectivement l'insertion et l'extraction de la rotule, et une position de verrouillage dans laquelle la douille coopère avec ledit manchon en empêchant une déformation du manchon suffisante pour une telle extraction de la rotule ;
- l'organe de réception et de blocage comprend un ressort de rappel du manchon déformable dans sa position de verrouillage ; et
- le manchon déformable est solidaire d'un bouton de manoeuvre accessible par un utilisateur, et permettant de déplacer le manchon de sa position de verrouillage à sa position de déverrouillage.

L'invention vise en outre un agencement de véhicule automobile, comprenant une pièce d'équipement de véhicule automobile, une pièce de structure ou de carrosserie de véhicule automobile, et un dispositif tel que décrit précédemment au moyen duquel sont fixées lesdites pièces entre elles.

En particulier, l'invention vise un tel agencement, dans lequel ladite pièce d'équipement est un mécanisme d'essuie-vitre, et ladite pièce de structure ou de carrosserie est une partie de caisse.

L'invention vise enfin un véhicule automobile comprenant un agencement tel que décrit précédemment.

Un mode particulier de réalisation de l'invention va maintenant être décrit en référence aux Figures des dessins annexés, sur lesquels :
- la Figure 1 est une vue en perspective d'un mécanisme d'essuie-vitre et d'un dispositif conforme à l'invention, en configuration assemblée ;
- la Figure 2 est une vue analogue des éléments de fixation solidaires de la partie de caisse, seuls ;
- la Figure 3 est une vue en coupe schématique, dans un plan médian vertical selon la ligne 3-3, de la première paire d'éléments de fixation, dans la configuration assemblée de la Figure 1 ;
- la Figure 4 est une vue analogue selon la ligne 4-4 de la deuxième paire d'éléments de fixation ;
- la Figure 5 est une vue analogue de la troisième paire d'éléments de fixation ;
- la Figure 6 est une vue en perspective éclatée de la troisième paire d'éléments de fixation représentée à la Figure 5 ; et
- les Figures 7 à 9 sont des vues analogues à la Figure 5, dans trois étapes successives illustrant le déverrouillage de la paire d'éléments de fixation par enclenchement.

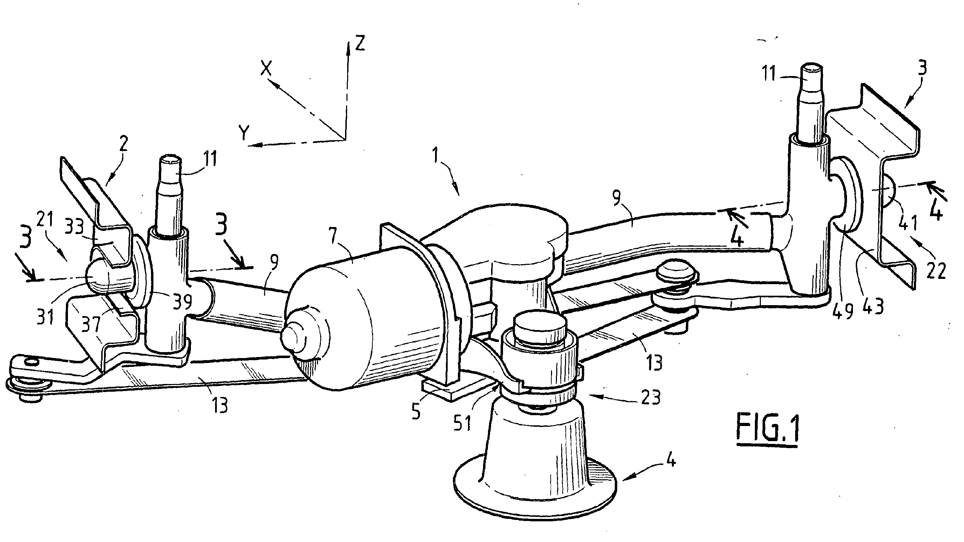

Sur la Figure 1, on a représenté un mécanisme 1 d'essuie-vitre pour véhicule automobile et trois supports rigides 2, 3, 4 de fixation, solidaires d'une partie de caisse de véhicule automobile (non représentée). Ces supports sont, par exemple, réalisés en tôle et soudés sur la caisse.

Le mécanisme 1 comporte essentiellement :
- une platine de support 5 centrale,
- un moteur d'entraînement 7 monté sur la platine 5,
- une barre transversale 9 s'étendant de part et d'autre de la platine 5,
- deux arbres 11 montés rotatifs chacun à une extrémité de la barre 9, et destinés à entraîner chacun un balai d'essuie-glace en rotation, et
- une tringlerie 13 prévue pour transmettre le mouvement d'entraînement du moteur 7 à chacun des arbres 11.

Pour la commodité de la description qui va suivre, on orientera le mécanisme 1 dans un repère X, Y, Z associé au véhicule sur lequel le mécanisme est supposé monté. Dans ce repère, l'axe X représente l'axe longitudinal du véhicule orienté vers l'avant, l'axe Y représente l'axe transversal orienté de la gauche vers la droite.

Le positionnement et la fixation du mécanisme 1 sur la caisse du véhicule sont réalisés au moyen de trois paires 21, 22, 23 d'éléments de fixation complémentaires.

On se réfère à présent plus particulièrement aux Figures 1 à 3.

La première paire 21 comprend d'une part un téton cylindrique 31, à extrémité libre de forme semi-sphérique, qui fait saillie de la barre 9 à une extrémité de cette dernière (extrémité droite), sensiblement dans le prolongement de la direction principale de la barre.

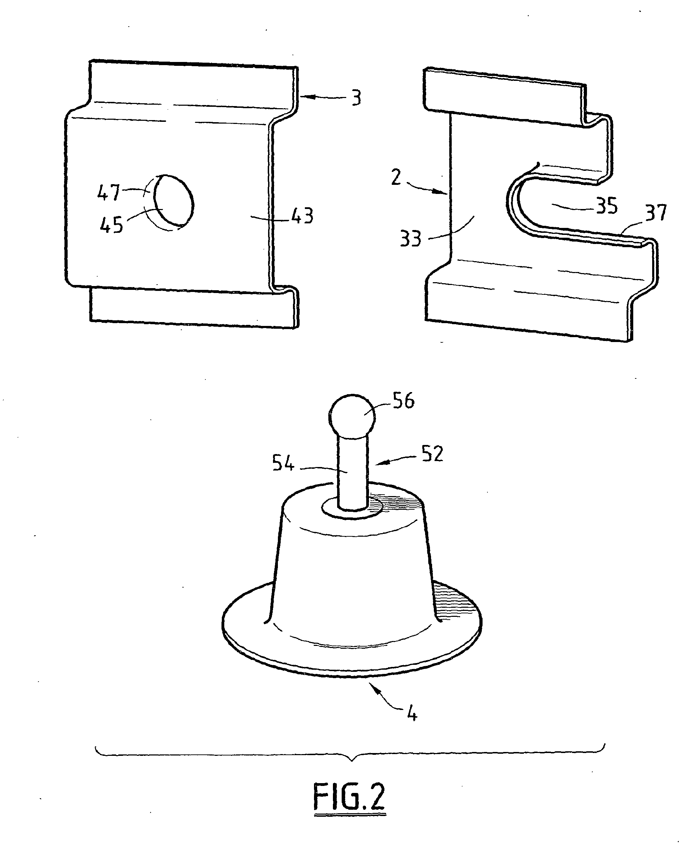

Comme cela est mieux vu sur la Figure 2, la première paire 21 comporte d'autre part un deuxième élément de fixation formé d'une plaquette 33 solidaire du support 2, cette plaquette étant dotée d'un trou oblong 35, complémentaire du téton 31.

Le trou oblong 35 s'étend sensiblement selon la direction longitudinale X, et s'ouvre du côté avant de la plaquette 33, en définissant une ouverture latérale d'introduction du téton 31. La plaquette 33 est formée également avec un rebord 37 s'étendant sur la périphérie du trou oblong 35, de façon à constituer une partie d'appui plan pour le téton 31.

Lorsque le téton 31 est engagé dans le trou oblong 35, comme représenté sur la Figure 1, le téton 31 s'étend suivant l'axe transversal Y, et les deux éléments de fixation 31, 33 définissent ensemble un palier d'appui du mécanisme 1 sur la caisse du véhicule, autorisant une liberté de rotation du mécanisme autour de l'axe Y, ainsi qu'un coulissement suivant l'axe X du téton 31 par rapport à la plaquette 33.

On notera que le deuxième élément de la première paire 21 est pourvu d'une collerette 39, solidaire du téton 31 à la base de ce dernier, et prévu pour limiter l'engagement du téton dans le trou oblong 35 suivant l'axe Y.

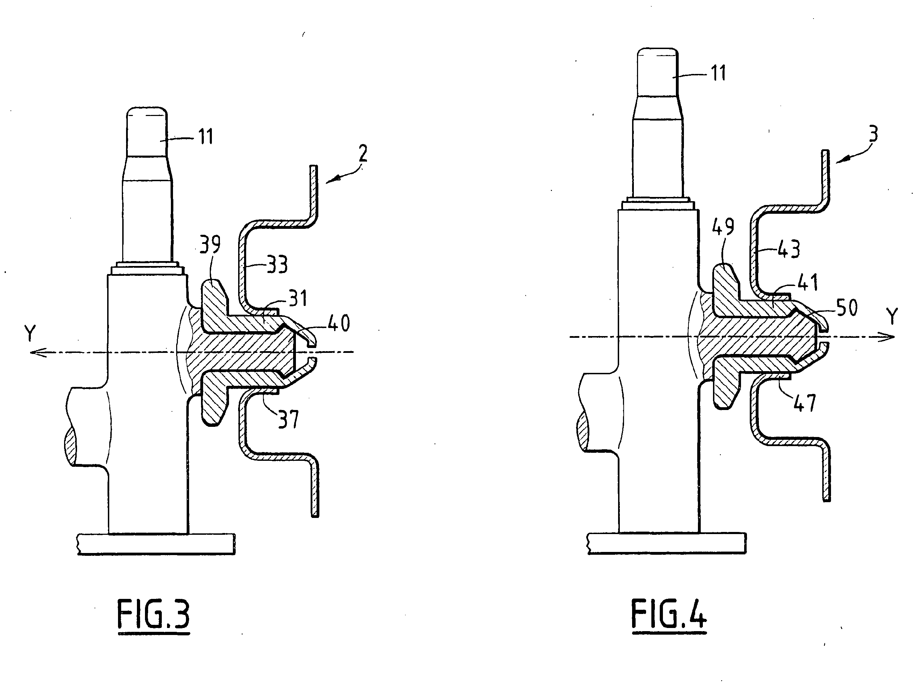

On voit sur la Figure 3 que le téton 31 et la bague 39 sont par exemple formés d'une pièce emmanchée sur une saillie cylindrique 40 d'extrémité du mécanisme 1. De préférence, cette pièce formant le téton 31 et la collerette 39 est un manchon élastomère, par exemple en caoutchouc. Ce manchon est prévu pour se déformer légèrement en compression lors de son engagement dans le trou oblong 35, et ainsi assurer une rétention par friction de l'extrémité correspondante du mécanisme, en engagement avec le support 2.

On se réfère à présent plus particulièrement aux Figures 1, 2 et 4.

La deuxième paire 22 comprend d'une part un téton 41 analogue au téton 31, sensiblement de même axe et orienté de façon opposée, agencé à l'autre extrémité de la barre transversale 9 (extrémité gauche). Le téton 41 constitue le premier élément de fixation de la deuxième paire 22.

La deuxième paire 22 comprend d'autre part un deuxième élément de fixation, sous la forme d'une plaquette 43 solidaire du support 3, pourvue d'un trou circulaire 45 de réception du téton 41, complémentaire de ce dernier. Le trou circulaire 45 est sensiblement d'axe Y, de sorte que lorsque le téton 41 est engagé dans le trou circulaire 45, comme représenté sur la Figure 1, la deuxième paire d'élément de fixation 22 définit un palier d'appui d'une extrémité du mécanisme 1 sur la caisse du véhicule, avec un degré de liberté en rotation autour de l'axe transversal Y.

De façon analogue à ce qui a été décrit pour la première paire d'éléments de fixation 21, et comme représenté sur la figure 4, la plaquette 43 est formée avec un rebord 47 s'étendant en périphérie du trou 45 de façon à constituer une surface d'appui périphérique pour le téton 41, plus importante que celle définie par l'épaisseur de la plaquette 43.

On notera que le premier élément de fixation de la deuxième paire 22 est, de façon analogue à ce qui a été décrit pour la première paire 21, pourvu d'une collerette 49 formée à la base du téton 41, afin de limiter l'engagement dans ce dernier dans le trou 45.

Le téton 41 est formé d'une pièce avec la collerette 49, cette pièce étant un manchon emmanché sur une saillie 50 d'extrémité du mécanisme. Le manchon est de préférence réalisé en matériau élastomère, tel que du caoutchouc, et prévu pour assurer une rétention par friction lorsque le téton 41 est engagé dans le trou 45. Ce manchon permet également d'obtenir un jeu en débattement, par rapport à l'axe du trou 45, du mécanisme 1 lorsque le téton 41 est engagé dans le trou.

Il découle de ce qui a été exposé précédemment que les liaisons définies par les première 21 et deuxième 22 paires d'éléments de fixation offrent au mécanisme 1 une liberté de rotation et une liberté de translation, limitée par les collerettes 39, 49, suivant l'axe commun Y des paliers.

La troisième paire d'éléments de fixation 23 comporte un premier élément 51 solidaire du mécanisme 1, et un deuxième élément 52 (Figure 2), solidaire du support 4.

Comme cela peut être vu sur la Figure 2, le deuxième élément 52 est formé essentiellement d'une tige cylindrique 54, qui fait saillie verticalement vers le haut du support 4, et d'une rotule 56 formée à l'extrémité libre de la tige.

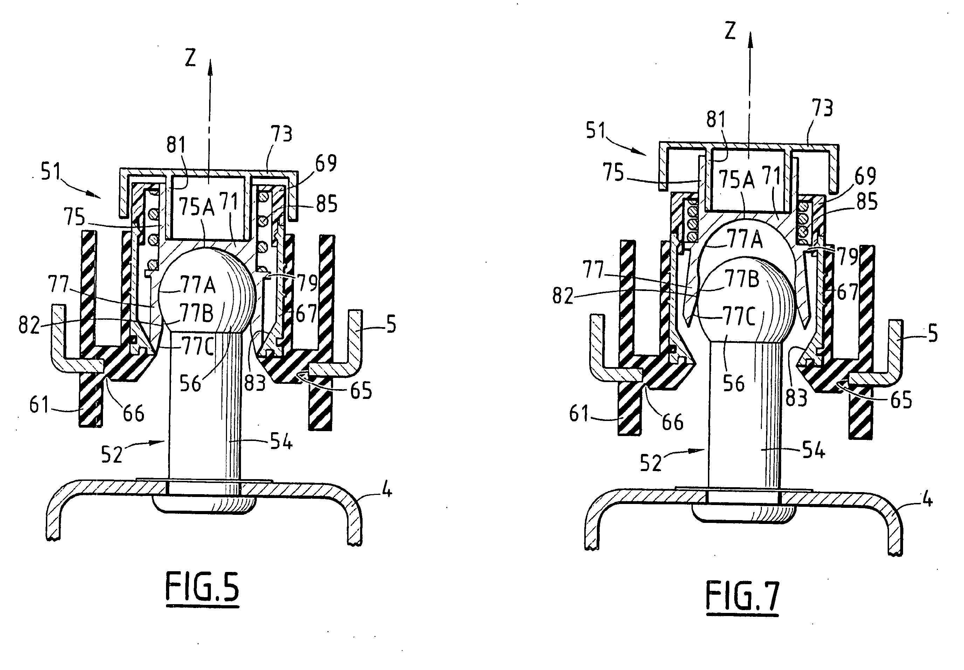

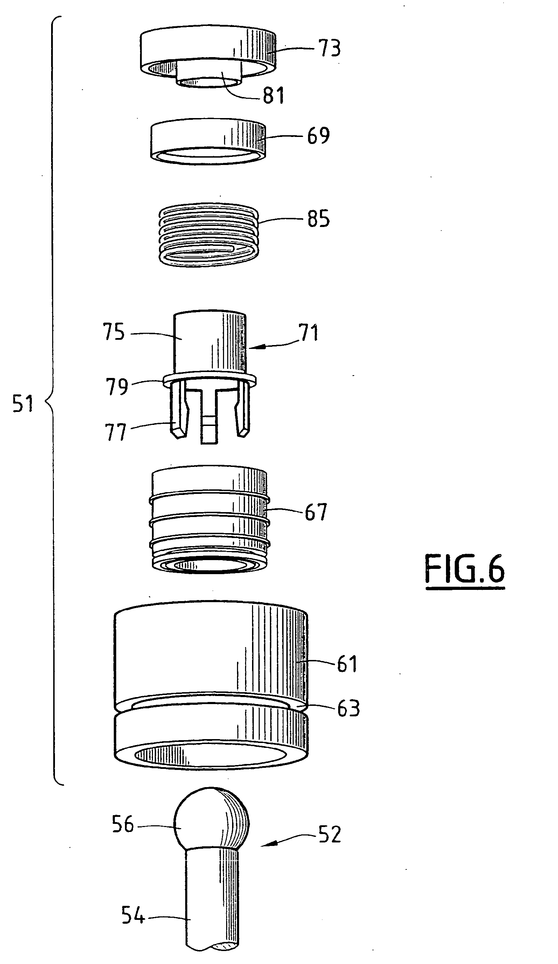

En référence aux Figures 5 et 6, on va à présent décrire le premier élément de fixation 51 de la troisième paire 23, et son mode d'engagement avec l'élément de fixation correspondant 52.

Le premier élément de fixation 51 comprend un bloc porteur 61 en matériau élastomère, par exemple en caoutchouc, fixé à la platine 5 du mécanisme 1. Le bloc porteur 61 est de forme extérieure essentiellement cylindrique, avec une rainure périphérique 63. Pour assurer la fixation du bloc porteur 61 sur la platine 5, cette dernière comprend un alésage circulaire dans lequel est engagé coaxialement le bloc porteur 61, le bord périphérique 65 de cet alésage étant engagé à force dans la rainure périphérique 63.

En variante (non représentée), l'alésage de fixation du bloc porteur 61 peut être bi-circulaire, une première partie de plus grand diamètre étant prévue pour l'engagement axial du bloc 61, et une deuxième partie de plus petit diamètre étant prévue pour le blocage par engagement à force du bloc 61. Les deux parties sont décalées latéralement et communiquent par une section étranglée.

On notera que le bloc porteur 61, dans sa partie inférieure, est formé intérieurement avec une gorge 66, dont le fond est tourné vers le bord d'alésage de la platine 5, et s'étend à proximité de ce dernier. Ainsi, la gorge 66 définit une région d'affaiblissement du bloc porteur 61, prévue pour permettre la rupture de ce dernier lors d'un choc sur le mécanisme (notamment un choc avec un piéton), et la désolidarisation du mécanisme 1 et de la partie de caisse.

L'élément 51 comprend en outre une douille rigide 67 fixée coaxialement à l'intérieur du bloc porteur 61. Par exemple, la douille rigide 67 peut être constituée de matière plastique surmoulée à l'intérieur du bloc porteur 61.

L'élément 51 comporte en outre une bague 69 fixée à l'extrémité supérieure de la douille 67, en obturant partiellement l'ouverture supérieure de cette dernière.

Par ailleurs, l'élément 51 comporte un équipage mobile constitué d'un manchon déformable 71 et d'un bouton de manoeuvre 73. Le manchon déformable 71 comprend, dans l'exemple représenté, un corps tubulaire supérieur 75 essentiellement rigide, et trois pattes 77 élastiquement déformables, qui font saillie axialement vers le bas depuis le bord inférieur du corps tubulaire 75. Dans sa partie inférieure, le corps tubulaire 75 est formé avec une collerette périphérique 79 formant un épaulement.

Intérieurement, le corps tubulaire 75 présente, à son extrémité inférieure, une empreinte 75A complémentaire d'une calotte sphérique supérieure de la rotule 56.

Le bouton de manoeuvre 73 est fixé au manchon déformable 71 par emmanchement à force d'une partie centrale cylindrique 81 dans le corps tubulaire 75.

Le manchon déformable 71 est monté à l'intérieur de la douille rigide 67 coiffée par la bague 69, de façon à pouvoir coulisser axialement à l'intérieur de la douille 67. Le bouton de manoeuvre 73 fait saillie vers le haut de l'ensemble fixe formé par la douille rigide 67 et la bague 69. Naturellement, le diamètre extérieur du corps tubulaire 75 est inférieur à celui de l'alésage central de la bague 69, de façon que le corps 75 puisse librement coulisser axialement au travers de cet alésage central. Le coulissement du manchon 71 dans la douille 67 est arrêté vers le haut par la venue en butée de la collerette 79 sur la bague 69, en périphérie de l'alésage central.

Les pattes élastiques 77 ont un profil intérieur, c'est-à-dire tourné vers l'axe du manchon, tel qu'une rotation de ce profil autour de l'axe du manchon génère une surface complémentaire de celle de la rotule 56. Ainsi, chaque patte 77 a un profil galbé, du côté du corps 75, selon un arc de cercle de même rayon que celui de la rotule 56, et présente du côté de son extrémité libre, une partie formant crochet 82, en saillie radiale tournée vers l'axe du manchon 71. Les pattes élastiques 77 peuvent ainsi recevoir entre elles la rotule 56 par complémentarité de forme et assurer une rétention axiale de cette dernière. Dans cette position, la partie supérieure de la rotule 56 vient en appui sur l'empreinte 75A du corps tubulaire 75, qui assure l'arrêt axial vers le haut de la rotule 56 par rapport au manchon 71, comme cela est visible sur la Figure 5.

Plus précisément, le profil intérieur des pattes élastiques 77 présente successivement, depuis l'extrémité inférieure du corps 75 vers l'extrémité libre des pattes 77, une partie en arc de cercle 77A complémentaire de la rotule 56, une partie linéaire 77B parallèle à l'axe Z correspondant à la partie formant crochet 82, et une partie linéaire 77C d'extrémité, définissant avec le profil des autres pattes 77 une entrée tronconique, évasée vers l'extérieur, du manchon déformable 71.

On notera que la douille 67, du côté de son extrémité inférieure, a aussi une section intérieure de forme tronconique 83, définissant au contraire un rétrécissement en sortie inférieure de l'alésage central de la douille 67.

Comme représenté sur la Figure 5, en l'absence de déformation des pattes élastiques 77, ces dernières butent par leurs extrémités libres sur cette section tronconique 83 de la paroi interne de la douille 67. La section tronconique 83 définit ainsi, avec l'extrémité libre des pattes élastiques 77, un arrêt du coulissement vers le bas du manchon déformable 71, à l'intérieur de la douille 67.

L'élément 51 est muni d'un ressort axial 85 enfilé sur le corps tubulaire 75, ressort qui porte d'une part sur la collerette 79, et d'autre part sur la bague 69, en périphérie de l'alésage central. Le ressort 85 assure le rappel du manchon déformable 71 en position de butée sur la section tronconique 83.

En référence aux Figures 5, et 7 à 9, on va à présent décrire le fonctionnement de la troisième paire 23 d'éléments de fixation, dont la structure a été décrite précédemment.

### Verrouillage (ou enclenchement)

On comprend d'après ce qui précède, que les éléments de fixation 51, 52 fonctionnent par enclenchement élastique suivant un axe d'enclenchement vertical Z.

On comprend également que le bloc élastomère 61 permet de compenser un désaxage important de ces éléments de fixation 51, 52.

Il faut d'ailleurs noter à présent que l'axe de rotation défini par les paires d'éléments de fixation formant palier 21, 22 est sensiblement orthogonal à la direction d'enclenchement Z définie par la troisième paire d'éléments de fixation 23.

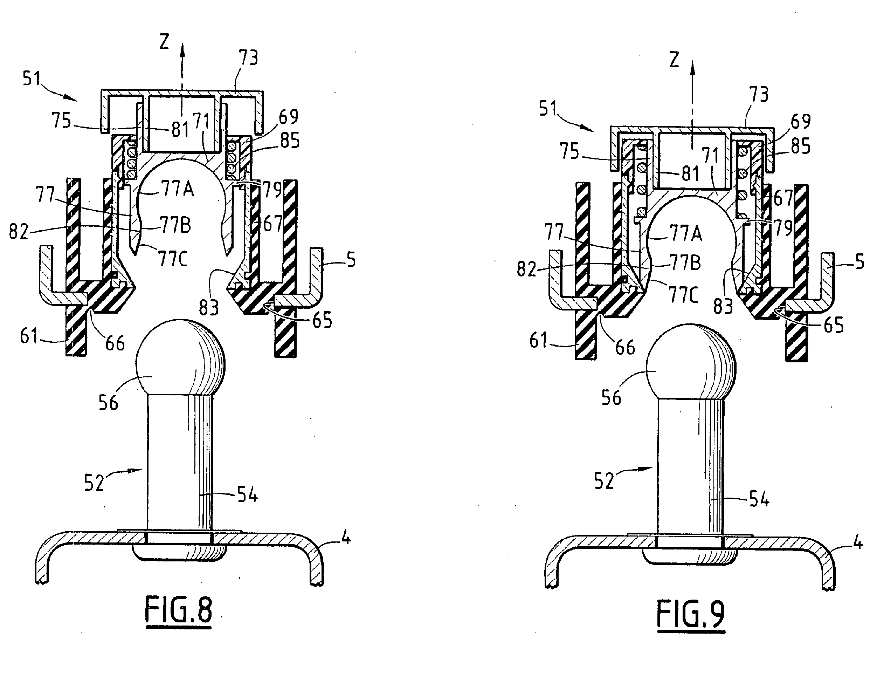

La Figure 9 représente la position de repos du premier élément 51 de la paire, le premier élément 51 étant en attente d'engagement sur le deuxième élément 52.

Dans cette position, l'équipage mobile formé du manchon déformable 71 et du bouton de manoeuvre 73 solidaire, se trouve dans sa position basse de butée dans la douille rigide 67. Le manchon 71 est sollicité dans cette position par le ressort 85, de sorte que les extrémités libres des pattes 77 sont maintenues en appui sur la section tronconique 83 de la douille 67.

A partir de la position d'attente qui correspond à celle de la Figure 9, l'engagement du premier élément 51 sur la rotule 56 du deuxième élément 52 provoque un coulissement vers le haut du manchon 71 à l'intérieur de la douille rigide 67, à l'encontre de l'effet du ressort de rappel 85. Lorsque ce coulissement est arrêté du fait de la compression maximale du ressort 85 et de la venue en butée de la collerette 79, les pattes 77 se déforment élastiquement en s'écartant de l'axe Z, autorisant ainsi l'engagement de la rotule 56 avec le manchon déformable 71, jusqu'à l'enclenchement élastique des pattes 77 sur la rotule 56.

Un réajustement de la position du mécanisme par rapport à la caisse permet la décompression du ressort de rappel 85.

A la suite de la phase d'engagement qui vient d'être décrite, la paire d'éléments de fixation parvient dans la configuration de verrouillage des deux éléments de fixation 51, 52, telle que représentée sur la Figure 5.

Dans cette configuration, le manchon déformable 71 est dans une position dans la douille rigide 67 qui empêche, dans la limite d'un certain effort de seuil, la séparation des deux éléments de fixation 51, 52 par simple traction.

En effet, en l'absence d'une manoeuvre de déverrouillage exercée sur le bouton 73, un retrait de l'élément 51 par rapport à l'élément 52 tend à provoquer un déplacement des extrémités libres des pattes 77 vers la section de plus faible diamètre de la section tronconique 83, et ainsi un resserrement vers l'axe des extrémités libres des pattes 77. Une telle action engendre une augmentation de l'effort de rétention exercée par les pattes élastiques 77 sur la rotule 56.

### Déverrouillage et démontage

A partir de la position de verrouillage représentée sur la Figure 5, un opérateur souhaitant démonter les éléments de verrouillage 51, 52 doit exercer une traction vers le haut sur le bouton de manoeuvre 73, comme illustré sur la Figure 7.

Les pattes 77, en suivant le contour de la rotule 56, se déforment élastiquement en s'écartant de l'axe Z. Leur déformation est rendue possible par leur passage dans la section cylindrique de l'alésage central de la douille 67. En d'autres termes, l'écartement des extrémités libres des pattes 77 n'est plus restreint par la section tronconique 83.

La rotule 56 étant dégagée des crochets 82, l'opérateur peut alors tirer le mécanisme d'essuie-vitre vers le haut, tout en maintenant une traction sur le bouton de verrouillage 73, à l'encontre du rappel élastique du ressort 85, de façon à dégager totalement la rotule 56 du manchon déformable 71 et de la douille rigide 67.

La paire d'éléments de fixation 51, 52 parvient alors dans la configuration illustrée sur la Figure 8.

Enfin, l'opérateur peut relâcher son effort de traction sur le bouton de manoeuvre 73, de sorte que l'équipage mobile 71, 73 est ramené dans sa position de repos. La position de repos obtenue à la fin de cette phase est illustrée sur la Figure 9.

Pour procéder au montage du mécanisme d'essuie-vitre 1 sur une partie de caisse de véhicule automobile, le mécanisme et la partie de caisse étant munis d'un dispositif de positionnement et de fixation tel que décrit précédemment, un opérateur réalise successivement les opérations suivantes :
- il engage le téton 41 dans le trou circulaire 45 prévu à cet effet, de façon à assembler la deuxième paire 22 d'éléments de fixation ;
- en jouant sur le débattement du téton 41 dans le trou 45, autorisé par l'élasticité du manchon élastomère constituant le téton, il engage le téton 31 dans le trou oblong 35, de façon à assembler la deuxième paire 21, les deux paires 21, 22 formant alors un palier de rotation du mécanisme 1 autour de l'axe commun Y ;
- en faisant pivoter le mécanisme 1 autour de l'axe de rotation Y matérialisé par les deux paires de fixation formant palier 21, 22, il amène ensuite l'élément 51 en position d'enclenchement sur le deuxième élément 52 de la paire 23, et réalise l'enclenchement du premier élément 51 sur le deuxième élément 52, de la façon qui a été décrite précédemment, suivant sensiblement l'axe Z.

Le dispositif qui fait l'objet de l'invention a été décrit dans le cas d'une application à la fixation d'un mécanisme d'essuie-vitre sur une partie de caisse de véhicule, qui est une application particulièrement avantageuse, mais il est susceptible de s'appliquer, de façon plus générale, à la fixation de deux pièces mécaniques quelconques.

## Revendications

1. Dispositif de positionnement et de fixation d'une première pièce mécanique sur une deuxième pièce mécanique, comprenant au moins trois paires d'éléments de fixation (21,22,23), chacune comprenant un premier élément de fixation (31,41,51) solidaire de la première pièce mécanique (1), et un deuxième élément de fixation (33,43,52) solidaire de la deuxième pièce mécanique, dans lequel l'une (23) desdites paires forme une liaison par enclenchement élastique selon une première direction (Z), tandis que les deux autres paires (21,22) forment des paliers offrant à la première pièce mécanique (1) une liberté de rotation par rapport à la deuxième pièce mécanique, suivant un même axe (Y) sensiblement orthogonal à ladite direction d'enclenchement (Z), **caractérisé en ce que** le deuxième élément de fixation (52) de la paire (23) formant liaison par enclenchement comprend une rotule (56) en saillie de la deuxième pièce mécanique, tandis que le premier élément de fixation (51) de la paire (23) formant liaison par enclenchement comprend un bloc en matériau élastomère (61) solidaire de la première pièce mécanique (1), et un organe de réception et de blocage de la rotule (56) logé dans ledit bloc élastomère (61).

2. Dispositif suivant la revendication 1, **caractérisé en ce que** le premier élément de fixation d'une première (21) des deux paires formant palier comprend un téton (31) partiellement cylindrique solidaire de la première pièce mécanique (1) à une extrémité libre d'un bras (9) en saillie de cette dernière, tandis que le deuxième élément de fixation de la même paire (21) comprend une plaquette de fixation (33) solidaire de la deuxième pièce mécanique et dans laquelle est ménagé un trou oblong (35) complémentaire du téton (31), ayant une ouverture latérale d'introduction dudit téton.

3. Dispositif suivant la revendication 2, **caractérisé en ce que** le trou oblong (35) s'étend selon une direction (X) sensiblement orthogonale d'une part à la direction d'enclenchement (Z), et d'autre part à l'axe de rotation (Y) défini par les paliers.

4. Dispositif suivant la revendication 2 ou 3, **caractérisé en ce que** le premier élément de fixation de la deuxième (22) des deux paires formant palier comprend un téton (41) partiellement cylindrique solidaire de la première pièce mécanique (1) à une extrémité libre d'un bras (9) en saillie de cette dernière, tandis que le deuxième élément de fixation de la même paire (22) comprend une plaquette de fixation (43) solidaire de la deuxième pièce mécanique et dans laquelle est ménagé un trou circulaire (45) complémentaire du téton (41).

5. Dispositif suivant l'une quelconque des revendications 1 à 4, **caractérisé en ce que** l'organe de réception et de blocage comprend une douille rigide (67) fixée dans le bloc (61) et un manchon déformable (71) coaxial, complémentaire, et monté mobile axialement à l'intérieur de la douille (67), entre une position de déverrouillage dans laquelle le manchon (71) est libre de se déformer lors d'un mouvement d'engagement ou de retrait de la rotule (56) pour autoriser respectivement l'insertion et l'extraction de la rotule, et une position de verrouillage dans laquelle la douille (67) coopère avec ledit manchon (71) en empêchant une déformation du manchon suffisante pour une telle extraction de la rotule (56).

6. Dispositif suivant la revendication 5, **caractérisé en ce que** l'organe de réception et de blocage comprend un ressort (85) de rappel du manchon déformable (71) dans sa position de verrouillage.

7. Dispositif suivant la revendication 5 ou 6, **caractérisé en ce qu**e le manchon déformable (71) est solidaire d'un bouton de manoeuvre (73) accessible par un utilisateur, et permettant de déplacer le manchon (71) de sa position de verrouillage à sa position de déverrouillage.

8. Agencement de véhicule automobile, comprenant une pièce d'équipement de véhicule automobile, une pièce de structure ou de carrosserie de véhicule automobile, et un dispositif suivant l'une quelconque des revendications 1 à 7 au moyen duquel sont fixées lesdites pièces entre elles.

9. Agencement suivant la revendication 8, **caractérisé en ce que** ladite pièce d'équipement est un mécanisme d'essuie-vitre, et ladite pièce de structure ou de carrosserie est une partie de caisse.

10. Véhicule automobile comprenant un agencement suivant la revendication 8 ou 9.

## Claims

1. A device for positioning and securing a first mechanical member on a second mechanical member comprising at least three pairs of securing members (21, 22, 23) each comprising a first securing member (31, 41, 51) fixedly joined to the first mechanical member (1) and a second securing member (33, 43, 52) fixedly joined to the second mechanical member, in which one (23) of the said pairs forms a resiliently engaging link in a first direction (Z) while the two other pairs (21, 22) form bearings offering the first mechanical member (1) freedom of rotation in relation to the second mechanical member about a particular axis (Y) substantially at right angles to the said engaging direction (Z), **characterised in that** the second attachment member (52) of the pair (23) forming the engaging link comprises a swivel post (56) projecting from the second mechanical member, while the first securing member (51) of the pair (23) comprising the engaging link comprises a block of elastomer material (61) fixedly joined to the first mechanical member (1) and a member for receiving and immobilising the swivel post (56) housed within the said elastomer block (61).

2. A device according to claim 1, **characterised in that** the first securing member of a first (21) of the two pairs forming a bearing comprises a partly cylindrical teat (31) fixedly joined to the first mechanical part (1) at one free extremity of an arm (9) projecting from the latter, while the second securing member of the same pair (21) comprises a securing plate (33) fixedly joined to the second mechanical member within which there is formed an oblong hole (35) matching the teat (31), with a lateral opening for insertion of the said teat.

3. A device according to claim 2, **characterised in that** the oblong hole (35) extends in a direction (X) which is substantially at right angles to both the engaging direction (Z) and the axis of rotation (Y) defined by the bearings.

4. A device according to claim 2 or 3, **characterised in that** the first securing member of the second (22) of the two pairs forming a bearing comprises a partly cylindrical teat (41) fixedly joined to the first mechanical member (1) at one free extremity of an arm (9) projecting from the latter, while the second securing member of the same pair (22) comprises a securing plate (43) fixedly joined to the second mechanical member in which there is a circular hole (45) matching the teat (41).

5. A device according to any one of claims 1 to 4, **characterised in that** the receiving and immobilising member comprises a rigid plug (67) fixed in the block (61) and a deformable matching coaxial sleeve (71) mounted so as to move axially within the plug (67) between an unlocking position in which the sleeve (71) is free to deform in the case of an engaging or withdrawal movement of the swivel post (59) to permit insertion and removal of the swivel post respectively, and a locking position in which the plug (67) acts together with the said sleeve (71) to prevent sufficient deformation of the sleeve for removal of the swivel post (56).

6. A device according to claim 5, **characterised in that** the receiving and immobilising member comprises a spring (85) returning the deformable sleeve (71) to its locking position.

7. A device according to claim 5 or 6, **characterised in that** the deformable sleeve (71) is fixedly joined to an operating button (73) which is accessible to a user, and through which the sleeve (71) can be moved from its locking position to its unlocking position.

8. A fitting for a motor vehicle comprising a part of motor vehicle equipment, a part of the structure or bodywork of the motor vehicle and a device according to any one of claims 1 to 7 through which the said parts are secured together.

9. A fitting according to claim 8, **characterised in that** the said equipment part is a windscreen wiper mechanism, and the said structural or bodywork part is part of the shell.

10. A motor vehicle comprising a fitting according to claim 8 or 9.

## Patentansprüche

1. Vorrichtung zur Positionierung und Befestigung von einem ersten mechanischen Teil auf einem zweiten mechanischen Teil, enthaltend mindestens drei Paare von Befestigungselemente (21,22,23), jedes umfassend ein erstes Befestigungselement (31,41,51) fest verbunden mit dem ersten mechanischen Teil (1), und ein zweites Befestigungselement (33, 43, 52) fest verbunden mit dem zweiten mechanischen Teil, wobei eines (23) dieser Paare eine Verbindung durch elastisches Einrasten in eine erste Richtung (Z) bildet, und die zwei weiteren Paare (21, 22) Lager bilden, welche dem ersten mechanischen Teil (1) Drehfreiheit in bezug auf das zweite mechanische Teil verschafft, gemäß einer gleichen Achse (Y) in Wesentlichen im geraden Winkel zur Richtung des Einrastens (Z), **dadurch gekennzeichnet, dass** das zweite Befestigungselement (52) von dem Paar (23) das die Verbindung durch Einrasten bildet, einen Kugelzapfen (56) umfasst, das über dem zweiten mechanischen Teil angeordnet ist, wobei das erste Befestigungselement (51) des die Verbindung durch Einrasten bildenden Paares (23) ein Block aus einem elastomeren Material (61) umfasst, das fest mit dem ersten mechanischen Teil (1) verbunden ist, und ein Organ zur Aufnahme und Arretierung des Kugelzapfens (56) das in dem elastomeren Block (61) angeordnet ist.

2. Vorrichtung gemäß Anspruch 1,
**dadurch gekennzeichnet, dass**
das erste Befestigungselement eines ersten (21) der zwei Lager bildenden Paare einen Passstift (31) aufweist, welcher teilweise zylindrisch ausgebildet ist, und fest mit dem ersten mechanischen Teil (1) am freien Ende einer Arm (9) verbunden ist und höher als die letztgenannte angeordnet ist, wobei das zweite Befestigungselement des gleichen Paares (21) eine Befestigungsplatte (33) aufweist, welche fest mit dem zweiten mechanischen Teil verbunden ist, und in welcher eine längliche Öffnung (35) komplementär zum Passstift (31) angeordnet ist, welche eine seitlich angeordnete Öffnung zur Aufnahme des Passstiftes besitzt.

3. Vorrichtung gemäß Anspruch 2,
**dadurch gekennzeichnet, dass** die längliche Öffnung (35) sich in einer Richtung (X) erstreckt, welche im Wesentlichen im geraden Winkel einerseits zur Richtung des Einrastens (Z) ist, und andererseits zur Rotationsachse (Y) welche durch die Lager definiert wird.

4. Vorrichtung gemäß Anspruch 2 oder 3, **dadurch gekennzeichnet, dass** das erste Befestigungselement des zweiten (22) der zwei Lager bildenden Paare einen Passstift (41) aufweist, welcher teilweise zylindrisch ausgebildet ist, und mit dem ersten mechanischen Teil (1) am freien Ende einer Arm (9) verbunden ist und höher als die letztgenannte angeordnet ist, wobei das zweite Befestigungselement des gleichen Paares (22) eine Befestigungsplatte (43) aufweist, welche mit dem zweiten mechanischen Teil verbunden ist, und in welcher eine kreisrunde Öffnung (45) komplementär zum Passstift (41) angeordnet ist.

5. Vorrichtung gemäß irgendeinem der Ansprüche 1 bis 4,
**dadurch gekennzeichnet, dass** das Organ zur Aufnahme und Arretierung eine feste Hülse (67) aufweist, welche in dem Block (61) befestigt ist und eine verformbare Muffe (71) welche koaxial und komplementär ist, und axial bewegbar im Inneren der Hülse (67) angeordnet, zwischen einer Entriegelungsstellung in welcher die Muffe (71) während einer Bewegung zum Einstecken oder Zurückziehen des Kugelzapfens (56) verformbar ist, um somit das Einrasten bzw. Herausziehen des Kugelzapfens zu ermöglichen, und einer Verriegelungsstellung in welcher die Hülse (67) mit der Muffe (71) zusammenwirkt und eine solche Verformung der Muffe verhindert welche für ein solches Herausziehen des Kugelzapfens (56) ausreicht.

6. Vorrichtung gemäß Anspruch 5,
**dadurch gekennzeichnet, dass**
das Organ zur Aufnahme und Arretierung einen Rückstellfeder (85) in der Verriegelungsstellung der Muffe (71) aufweist.

7. Vorrichtung gemäß Anspruch 5 oder 6,
**dadurch gekennzeichnet, dass**
die verformbare Hülse (71) mit einem Bedienungsknopf (73) verbunden ist, welcher für einen Anwender zugänglich ist, und welcher es ermöglicht, die Hülse (71) aus seiner Verriegelungsstellung in seine Entriegelungsstellung zu bringen.

8. Anordnung eines Kraftfahrzeuges, umfassend einen Ausrüstungsteil eines Kraftfahrzeuges, einen Teil der Konstruktion oder der Karosserie des Kraftfahrzeuges, und eine Vorrichtung gemäß irgendeinem der Ansprüche 1 bis 7 mittels welcher die Teile mit einander befestigt sind.

9. Anordnung gemäß Anspruch 8, **dadurch gekennzeichnet, dass** das Ausrüstungsteil der Antrieb eines Scheibenwischers ist und das Teil der Konstruktion oder der Karosserie ein Teil der Karosserie ist.

10. Kraftfahrzeug, enthaltend eine Anordnung gemäß Anspruch 8 oder 9.
